# EUROPÄISCHE PATENTSCHRIFT

(11) **EP 2 363 809 B1**
(45) Veröffentlichungstag und Bekanntmachung des Hinweises auf die Patenterteilung: **07.03.2018**
(21) Anmeldenummer: 11153945.8
(22) Anmeldetag: 10.02.2011
(51) Int. Cl.: G06F 11/36, G06F 9/45

(54) **Verfahren zur Optimierung eines Steuerprogramms für Aktuatoren**
Method for optimizing a control program for actuators
Méthode pour optimer un programme de contrôle pour des actuateurs

(30) Priorität: 02.03.2010 DE 102010009994
(43) Veröffentlichungstag der Anmeldung: 07.09.2011
(73) Patentinhaber: dSPACE digital signal processing and control engineering GmbH, 33102 Paderborn (DE)
(72) Erfinder: Trautmann, Wolfgang, 33102, Paderborn (DE)
(74) Vertreter: Koch Müller Patentanwaltsgesellschaft mbH

(56) Entgegenhaltungen:
- US-A- 5 740 443
- US-A- 6 072 951
- HWU W W ET AL: "INLINE FUNCTION EXPANSION FOR COMPILING C PROGRAMS", ACM SIGPLAN NOTICES, ACM, ASSOCIATION FOR COMPUTING MACHINERY, NEW YORK, NY, US, Bd. 24, Nr. 7, 1. Juli 1989 (1989-07-01), Seiten 246-257, XP001057040, ISSN: 0362-1340, DOI: DOI:10.1145/74818.74840 ISBN: 978-1-58113-450-6
- Jens Braunes: "Kurzer Weg zum schnellen Code", elektroniknet: Entwicklungs-Tools für Hard- und Software, 12. Februar 2010 (2010-02-12), Seiten 1-4, XP55001680, Gefunden im Internet: URL:http://www.elektroniknet.de/embedded/t echnik-know-how/entwicklungs-tools-fuer-ha rd-und-software/article/1649/0/Kurzer_Weg_ zum_schnellen_Code/?type=99 [gefunden am 2011-06-29]
- Kang Su Gatin: "Profile-Guided Optimization with Microsoft Visual C++ 2005", , 1. März 2004 (2004-03-01), Seiten 1-10, XP55001810, Gefunden im Internet: URL:http://msdn.microsoft.com/en-us/librar y/aa289170%28v=vs.71%29.aspx [gefunden am 2011-06-30]
- NN: 'TargetLink 3.0', [Online] 01 Januar 2009, Seiten 1 - 52, XP055024535 Gefunden im Internet: <URL:http://129.175.226.9/@Coll09USB/docs/d SPACEcol/TargetLink.pdf> [gefunden am 2012-04-16]

## Beschreibung

Die vorliegende Erfindung betrifft ein Verfahren zur Optimierung eines Steuerungsprogramms für Aktuatoren gemäß dem Oberbegriff des Patentanspruchs 1.

Verfahren zur Optimierung eines Steuerungs- oder Regelungsprogramms - im Folgenden Steuerungsprogramm genannt. Aktuatoren werden insbesondere in mechatronischen Systemen, z.B. für Steuergeräte in der Automobilindustrie oder der Flugzeugindustrie eingesetzt.

Steuerungsprogramme finden Verwendung unter anderem beim Steuern von Aktuatoren, Überwachen komplexer Vorgänge, Erfassen und Verarbeiten einer Vielzahl von Werten von Umgebungsdaten und / oder von Benutzereingaben. Steuerungsprogramme enthalten Funktionen, mit denen die Eingangswerte oder Eingangssignale verarbeitet werden, wie etwa Daten aus Sensorsignalen und / oder Benutzereingaben. Entsprechende Ausgangswerte oder Ausgangssignale werden dann von den Steuerungsprogrammen beispielsweise zur Steuerung von Aktuatoren in Prozessen ausgegeben. Zu Informationszwecken können die Ausgangswerte oder -signale auch auf Anzeigegeräten oder in Dateien ausgegeben werden.

Durch die Vielzahl der implementierten Funktionen nimmt die Komplexität der Steuerungsprogramme immer weiter zu. Insbesondere bei der Wiederverwendung oder Erweiterung von Steuergeräten mit neuen Funktionen, wird typischerweise der Speicherbedarf für das auszuführende Programm erhöht und übersteigt oft den zur Verfügung stehenden Speicherplatz. Auch neu entworfene Systeme unterliegen häufig harten Ressourcenbeschränkungen. Des Weiteren ist es eine Anforderung an die Steuerungsprogramme, dass insbesondere zeitkritische Steuerungsaufgaben in der gebotenen Ausführungszeit abgearbeitet werden.

Einerseits ist es vorteilhaft, für sehr schnell auszuführende Steuerungsaufgaben, bzw. Funktionen, die einer Funktion zugeordneten Programmzeilen unmittelbar an der Stelle in das Steuerungsprogramm einzubinden, wo die Funktion benötigt wird, denn dadurch lassen sich nicht nur zeitraubende Funktionsaufrufe ersparen, es bieten sich oft auch weitere Optimierungsmöglichkeiten, z.B. zur Einsparung von Zwischenvariablen. Anderseits wird bei mehrmaliger Verwendung der Funktion an unterschiedlichen Stellen des Steuerungsprogramms die Gesamtlänge des Steuerungsprogramms und damit der Speicherverbrauch für das auszuführende Programm deutlich erhöht. Um den Bedarf an Speicherplatz möglichst gering zu halten, ist es wünschenswert, gerade die Programmzeilen der häufig aufgerufenen Funktionen als Unterprogramme einzubinden und die Unterprogramme per Sprung und Rücksprung abzuarbeiten. Hierdurch wird jedoch die Ausführungszeit des Steuerungsprogramms für die Funktion verlängert, unter anderem durch Kopiervorgänge zur Übergabe von Variablen der Funktion, bzw. dadurch dass der sogenannte Stapelspeicher oder "stack" für die Übergabeparameter auf- und abgebaut werden muss und Befehle für Hin- und Rücksprung auszuführen sind.

Zur Entwicklung der Steuerungsprogramme, z.B. Software-Code für Steuergeräte in der Automobilindustrie, werden zunehmend modellbasierte Entwicklungswerkzeuge verwendet. Diese ermöglichen es, die Funktionalität des Steuerungsprogramms zunächst graphisch, in Form von Modellen zu spezifizieren. Die Spezifikation der Funktionalität erfolgt hierbei auf einer höheren Abstraktionsebene als eine Spezifikation auf der Ebene von textuellem Software Code wie etwa C-Code. Dies ermöglicht einerseits eine bessere Übersichtlichkeit über die Funktionalität des Steuerungsprogramms, andererseits lassen sich solche Modelle besser wiederverwerten, da sie aufgrund des höheren Abstraktionsniveaus allgemeineren Charakter haben und noch nicht auf eine konkrete Weise der Implementierung und/oder der Programmierung festgelegt sind. Die Möglichkeit der Wiederverwertung - auch durch verschiedene Entwickler - spart kostspielige Entwicklungszeit. Weitere Vorteile bei der Verwendung modellbasierter Entwicklungswerkzeuge ergeben sich zum einen dadurch, dass die Funktionalität der Modelle schon auf einer hohen Abstraktionsebene getestet werden kann, d.h. das Modell kann in sogenannten "model-in-the-loop"-Tests ausgeführt und auf Fehler überprüft werden. Zum anderen kann auf Basis eines Modells von einem Codegenerator automatisch Code für ein Steuerungsprogramm erzeugt werden. Dies ist beispielsweise C-Code, der auf einem Steuergeräte-Prozessor ablaufen kann oder etwa VHDL-Code für einen FPGA oder ASIC.

Der erzeugte Code wird dann in einer nächsten Teststufe getestet. Das Testen des Software-Codes wird auch als "Software-in-the-Loop" bezeichnet. Der Code wird dabei auf Fehler bezüglich seiner Funktionalität geprüft. In einem weiteren Schritt kann der Code auch auf einem externen Zielprozessor ausgeführt werden. In diesem Fall spricht man von einer "Processor-in-the-Loop"-Simulation. Zum Überprüfen der Funktionalität des Software-Codes wird oft in einem ersten Schritt sogenannter "instrumentierter Programmcode" als Steuerungsprogramm mittels des Codegenerators erzeugt und ausgeführt. Der instrumentierte Code ist nicht vollständig optimiert, sondern enthält z.B. zusätzliche Logging-Makros mittels derer während der Testphase nachgehalten wird, welche Programmteile oder Funktionen wie häufig durchlaufen oder aufgerufen werden. Solche Informationen, die der Software-Entwickler durch das Aufzeichnen von Daten bei Testdurchläufen erhält, werden als "Profiling-Informationen" bezeichnet.
Eine andere Möglichkeit Profiling-Informationen zu erhalten, besteht darin, Auslesebefehle in das kompilierte, ausführbare Programm einzubauen. Dabei werden z.B. mittels der Speicheradressen von persistenten Variablen deren Werte während der Ausführung des Programms ausgelesen. Ein weiteres Verfahren den generierten Code zu instrumentieren ist es, aus dem generierten (nicht instrumentierten) C-Code zuerst AssemblerCode im Sinn einer anderen Form von Code als Zwischenrepräsentation vom Compiler erzeugen zu lassen, diesen zu instrumentieren und dann den instrumentierten Assemblercode zu kompilieren. Damit können sowohl persistente als auch flüchtige Werte wie beispielsweise Stackvariablen, d.h. Variablen, die im Stapelspeicher zwischengespeichert werden, protokolliert werden.

Aus der WO 95/02863 ist ein Verfahren zum Erzeugen von instrumentiertem Programmcode, allerdings auf der Basis eines bereits vorliegenden objektorientierten Codes - bekannt, bei dem an denjenigen Programmstellen, welche von der Kommunikation mit anderen Programmstellen betroffen sind, die Kommunikationsvorgänge zwischen den Objekten mit zugehörigen Parametern in einer Protokolldatei aufgezeichnet und anschließend graphisch dargestellt werden.
Nachteilig ist, dass zeitaufwändige und fehlerträchtige Bearbeitungsschritte notwendig sind, um aus der graphischen Darstellung oder mittels einer Protokolldatei, die für eine Programmoptimierung wichtigen Profiling-Informationen zu extrahieren und zu nutzen.
Auch bei Compilern, d.h. Programmen, die einen bereits vorliegenden Programmcode in einen kompilierten, d.h. maschinenlesbaren Object-Code übersetzen, ist die Verwendung von "Profiling-Informationen" zur Optimierung des Object-Codes bekannt und beispielsweise in der US 6072951 A oder dem Artikel "Profile-Guided Optimization with Microsoft Visual C++ 2005" von Kang Su Gatlin beschrieben. In diesen Schriften findet sich kein Hinweis auf die Verwendung von graphsichen Modellen zur Erstellung eines Steuerungsprogramms.
Eine Beschreibung eines Werkzeugs zur automatischen Generierung von instrumentiertem Code für Steuerungsprogramme aus einem ausführbaren Modell findet sich beispielsweise unter http://129.175.226.9/@Coll09USB/docs/dSPACEcol/TargetLink.pdf .

Aufgabe der vorliegenden Erfindung ist es, ein Verfahren zur Optimierung eines Steuerungsprogramms für einen Aktuator anzugeben, das die Nachteile des Standes der Technik verringert.

Die erstgenannte Aufgabe wird durch die Merkmale des Patentanspruchs 1 gelöst. Günstige Ausgestaltungsformen sind Gegenstand von Unteransprüchen.

Erfindungsgemäß wird ein Verfahren zur Optimierung eines Steuerungsprogramms für Aktuatoren bereitgestellt, wobei das Steuerungsprogramm mindestens eine erste Funktion zur Steuerung eines ersten Aktuators beinhaltet, und in einem ersten Schritt das Steuerungsprogramm als ausführbares Modell, d.h. z.B. in Form einer graphischen Repräsentation des Steuerungsprogramms, wie etwa einem Blockdiagramm oder einem Zustandsdiagramm, vorliegt mit mehreren Modell-Einheiten wie z.B. Konstanten-, Funktions- oder Unterdiagrammblöcken. Wobei der ersten Funktion eine erste Modell-Einheit zugeordnet ist und basierend auf dem Modell mittels eines Codegenerators ein instrumentierter Programmcode - damit ist entweder Quellcode oder auch schon ausführbarer Code gemeint - für ein Teststeuerungsprogramm erzeugt wird, d.h. für eine noch nicht vollständig optimierte Version des Steuerungsprogramms. Wobei der ersten Funktion erste Programmzeilen und ein erster Parameter zugeordnet werden, und anschließend mittels einer Testeinheit das Teststeuerungsprogramm mit vorgegebenen Eingabewerten, auch als Stimuli bezeichnet, mehrfach abgearbeitet wird. Basierend auf dem Ergebnis der Abarbeitung wird dem ersten Parameter ein Wert zugeordnet, wobei der dem ersten Parameter zugeordnete Wert in einem der ersten Modell-Einheit zugeordneten Speicherbereich gespeichert wird, und in einem zweiten Schritt mittels des Codegenerators ein optimiertes Steuerungsprogramm mit zweiten der ersten Funktion zugeordneten Programmzeilen erzeugt wird, wobei von einer Optimierungseinheit des Codegenerators der dem ersten Parameter zugeordnete Wert aus dem zugeordneten Speicherbereich gelesen wird und mit einem zugeordneten vorgegebenen Schwellwert, bzw. mit einer zugeordneten vorgegebenen Randbedingung, wie z.B. "Minimieren von Speicherplatz", verglichen wird. Allgemein lässt sich eine Randbedingung auch durch einen Schwellwert ausdrücken. Schwellwert oder Randbedingungen können vom Benutzer beispielsweise in dem Modell vorgegeben, bereits in der Optimierungseinheit hinterlegt oder von der Optimierungseinheit heuristisch ermittelt sein. Anhand des Ergebnisses des Vergleichs entscheidet die Optimierungseinheit, ob die zweiten, der ersten Funktion zugeordneten Programmzeilen in das Steuerungsprogramm unmittelbar oder mittels eines Unterprogrammaufrufs eingebunden werden. Das beschriebene Verfahren kann vorzugsweise iterativ durchlaufen werden, indem das im zweiten Schritt erzeugte, optimierte - eventuell jedoch nicht vollständig optimierte - Steuerungsprogramm wiederum mit einer Instrumentierung versehen, also als weiteres Teststeuerungsprogramm erzeugt und verwendet wird, auf dessen Basis wiederum neue Profiling-Informationen gesammelt und der Optimierungseinheit für einen weiteren Optimierungsschritt hinterlegt werden. In einer bevorzugten Ausführungsform kann der Benutzer vorgeben, wie viele Iterationsschritte maximal durchlaufen werden dürfen. Können gewisse vorgegebene Randbedingungen nicht erfüllt werden, so kann die Optimierungseinheit beispielsweise dem Benutzer vorschlagen, die Randbedingungen zu modifizieren oder aber auf Grund von Heuristiken entscheiden und eventuell dem Benutzer eine Mitteilung darüber machen.

Ein Vorteil des erfindungsgemäßen Verfahrens zur Optimierung eines Steuerungsprogramms für Aktuatoren ist es, dass wenigstens ein Wert eines gewünschten Parameters anhand von Testdurchläufen des Steuerungsprogramms mit repräsentativen vorgegebenen Werten, auch Stimuli genannt, innerhalb der Testeinheit mittels des instrumentierten Programmcodes eines Teststeuerungsprogramms automatisch ermittelt und gespeichert und anschließend der gespeicherte Wert für eine Optimierungseinheit bereitgestellt wird. Durch die automatische Hinterlegung von der einzelnen Funktion zugeordneten Informationen - auch Profiling-Informationen genannt - in Form mindestens eines Wertes eines Parameters, auf den/die die Optimierungseinheit des Codegenerators automatisch zugreifen kann, wird von der Erfindung eine Optimierungshilfe zur Erzeugung eines hocheffizientes Steuerungsprogramms bereitgestellt. Eine aufwändige und fehlerträchtige manuelle Sammlung und Bereitstellung der Profiling-Informationen für die Optimierungseinheit lässt sich weitestgehend vermeiden. Vorteilhaft ist dabei des Weiteren, dass der abgespeicherte Wert eines Parameters mit einer Modelleinheit in Verbindung steht. Bevorzugt ist diese Verbindung auch für den Benutzer des Blockdiagrammmodells ersichtlich. Somit können Profiling-Informationen auf einer höheren Abstraktionsebene als der des Programmcodes abgelegt und auch auf dieser Ebene weitergegeben werden, wenn das Modell werden soll. Um die Profiling-Informationen heranzuziehen müssen dann keine weiteren Protokolldateien erzeugt oder verwaltet werden.

Als Ausgangspunkt für die Optimierung wird das Steuerungsprogramm als ausführbares Modell z.B. in Form eines Blockdiagramms erstellt, d.h. mit Hilfe von Blöcken lassen sich Funktionen darstellen und ausführen. Eine Funktion kann beispielsweise durch einen einzelnen Block oder durch Gruppen von Blöcken in einem Blockdiagramm repräsentiert werden, wobei die Blöcke bevorzugt durch Linien, welche den Datenfluss und/oder Kontrollfluss anzeigen, verbunden sein können. Mittels eines solchen Modells aus Blöcken und Linien kann ein Steuerungsprogramm dargestellt und auch ausgeführt werden. Einzelne Funktionen, die mittels mehrerer Blöcke oder einer Gruppe von Blöcken abgebildet sind, können auch in einem Unterdiagramm eines Blockdiagramms, d.h. einem Untermodell, zusammengefasst werden. Die Unterdiagramme weisen Verbindungen auf zu weiteren Unterdiagrammen, bzw. Funktionen oder einzelnen Blöcken, mit denen Signale ausgetauscht werden. Die Verbindungen zwischen den oben aufgezählten unterschiedlichen Blockdiagramm-Einheiten lassen sich ebenfalls bevorzugt als Linien darstellen.

Unter dem Begriff eines instrumentierten Steuerungsprogramms wird entweder ein Programmcode des Steuerungsprogramms in einer Programmiersprache wie beispielsweise C oder C++ verstanden oder aber ein ausführbares Programm, welches neben der eigentlichen Funktionalität auch Codeanteile - entweder auf Quellcode- oder Objektcodeebene - enthält, die z.B. das Auslesen von Werten von Variablen oder das Protokollieren der Anzahl von Ausführungen einer Funktion ermöglichen. Im Unterschied zu einem in einem finalen Schritt erzeugten vollständig optimierten Steuerungsprogrammcode enthält der instrumentierte Code z.B. sogenannte Logging Makros oder Logging Funktionen oder Auslesebefehle. Anhand derartiger Logging Makros oder Funktionen wird es der Testeinheit möglich, Informationen zu einer Funktion, wie z.B. die Anzahl der Funktionsaufrufe, zu erfassen und abzuspeichern. Mit beiden Arten von instrumentierten Programmen können Profiling-Informationen im Rahmen einer "Software-in-the-Loop"-oder einer "Processor-in-the-Loop"-Simulation gesammelt werden.

Mit dem Begriff Aktuator werden neben Stellgliedern wie beispielsweise elektromechanischen Vorrichtungen, insbesondere Elektromotoren und /oder Relais, auch alle Sensorvorrichtungen umfasst.

Zum Sammeln von Profiling-Informationen wird das instrumentierte Teststeuerungsprogramm innerhalb der Testeinheit mehrfach teilweise oder vollständig durchlaufen, wobei das Programm mit verschiedenen Stimuli beaufschlagt wird, welche - möglichst repräsentativ - vom Benutzer bereitgestellt werden. Ein Beispiel für eine Profiling-Information, die zu Optimierungszwecken als Parameter einer Funktion zugeordnet werden kann, ist die Anzahl, wie oft die Funktion während eines Teststeuerungsprogramm-Durchlaufs aufgerufen bzw. durchlaufen wird oder aber der Mittelwert der Anzahl der Funktionsaufrufe, gemittelt über alle Programmdurchläufe mit verschiedenen Stimuli.

Gemäß einer Weiterbildung wird dem Modell, welches im Allgemeinen mehrere Modell-Einheiten umfasst, ein Speicherbereich unmittelbar zugeordnet. Hierbei kann es vorteilhaft sein, jeder Funktion ein Untermodell zuzuordnen und insbesondere der ersten Funktion ein erstes Untermodell zuzuordnen. Ferner ist es vorteilhaft, dass der Speicherbereich aus einzelnen Unterspeicherbereichen besteht und einem Untermodell jeweils ein Unterspeicherbereich zugeordnet wird.

In einer anderen Ausführungsform wird von der Testeinheit der ersten Funktion ein zweiter Parameter zugeordnet und der dem zweiten Parameter zugeordnete Wert in dem der ersten Funktion zugeordneten Unterspeicherbereich abgespeichert. Andererseits lassen sich von der Testeinheit auch unterschiedliche Parameter wie die Ausführungszeit einer Funktion und / oder Anzahl der Funktionsaufrufe verbinden. Weiterhin ist es gemäß einer weiteren Ausführungsform vorteilhaft, wenn eine zweite Funktion mit weiteren Parametern vorgesehen ist und der zweiten Funktion ein zweites Untermodell und ein zweiter Unterspeicherbereich zugeordnet werden. Hierdurch lassen sich sowohl mittels des Teststeuerungsprogramms als auch mittels des optimierten Steuerungsprogramms mehrere Funktionen eines Aktuators oder Funktionen eines zweiten oder weiterer Aktuatoren, welche beispielsweise nur eine Funktion aufweisen, steuern.

Es wird als vorteilhaft erachtet, mittels der Testeinheit bei der Abarbeitung des Teststeuerungsprogramms als Wert des ersten Parameters einer Funktion, die Anzahl der Aufrufe der Funktion während eines Programmdurchlaufs, bzw. ein statistisches Mittel für die Anzahl der Funktionsaufrufe oder Funktionsdurchläufe für eine Vielzahl von Testprogrammdurchläufen mit repräsentativen Stimuli, zu erfassen und in dem zugeordneten Unterspeicherbereich zu speichern.
Des Weiteren ist es vorteilhaft, mittels der Testeinheit als Wert des zweiten Parameters einer Funktion, die Ausführungszeit der Funktion - bzw. ein repräsentatives statistisches Mittel - zu erfassen und in dem zugeordneten Unterspeicherbereich zu speichern. Zur Bestimmung der Ausführungszeit einer Funktion können sogenannte "Counter"-Register als Zeitgeber verwendet werden. Damit kann auch die Anzahl der durchgeführten Prozessortaktschritte ermittelt werden. Dabei ist es möglich, um ein qualitatives Maß zu erhalten, die Anzahl der Prozessortaktschritte abzuziehen, die allein auf die Instrumentierung der Logging Macros oder Funktionen verwendet wurden. Für ein quantitatives Maß betrachtet man den nicht instrumentierten Code

Des Weiteren ist es gemäß einer Ausführungsform vorteilhaft, mittels der Testeinheit als Wert eines weiteren Parameters einer Funktion mindestens eine Art von Speicherplatzbedarf der Funktion zu erfassen und in einem Bereich des der Funktion zugeordneten Unterspeicherbereichs abzuspeichern. Es gibt mindestens zwei Arten von Speicherplatz, bezüglich derer - einzeln oder mittels einer Verknüpfung gemeinsam - das Steuerungsprogramm optimiert werden kann.

Eine erste Art des Speicherplatzes stellt die von dem Stapelspeicher benötigte Größe des flüchtigen Speichers (RAM) dar. Zur Bestimmung des Stapelspeicherbedarfs einer Funktion lassen sich bei der Abarbeitung des Teststeuerungsprogramms vor und nach Ausführung der Funktion sogenannte "Hookfunktionen" ausführen.
Vor der Ausführung beschreibt man den freien Speicherbereich mit einem Muster - nach Ausführung der Funktion bestimmt man den Bereich, der während der Ausführung überschrieben wurde und ermittelt so den Stapelspeicherverbrauch.
In einer Weiterbildung ist der Wert des Stapelspeicherplatzbedarfs ein statistischer Mittelwert.

Eine zweite Art des Speicherplatzes stellt der Bedarf an sogenanntem Permanentspeicher ROM dar, der von der auszuführenden Funktion benötigt wird. Der ROM-Bedarf lässt sich beispielsweise aus den Sprungadressen ermitteln.

In einer weiteren Ausführungsform ist es vorteilhaft die einzelnen Werte der einer Funktion zugeordneten Parameter insbesondere für Kontrollzwecke auszugeben und / oder anzuzeigen, z.B. über eine graphische Benutzerschnittstelle (GUI) des Blockdiagramms. Durch eine bildhafte Darstellung der Werte an den zugehörigen Stellen des Modells lassen sich kritische Werte wie beispielsweise eine übergroße Ausführungszeit und / oder eine erhöhte Anzahl von Funktionsaufrufen und / oder die Größe des benötigten Speicherplatzes auch bei komplexen Steuerungsprogrammen, die eine Vielzahl von Funktionen zur Steuerung einer Vielzahl von Aktuatoren aufweisen, leicht kontrollieren. Hierzu ist es vorteilhaft, nur diejenigen Unterdiagramme in Form von Blöcken d.h. Funktionen beispielsweise farbig darzustellen, deren mittels der Testeinheit erfassten Werte über einem oder mehreren und / oder unter einem oder mehreren vorgegebenen Schwellwerten liegen. Die Schwellwerte sind dabei bevorzugt in der Optimierungseinheit abgespeichert und können von dem Benutzer vorgegeben werden.

Gemäß einer anderen Ausführungsform wird mittels der Optimierungseinheit nicht nur ein Wert eines einer Funktion zugeordneten Parameters mittels der Optimierungseinheit gelesen, sondern von der Optimierungseinheit werden mehrere Werte aus dem Unterspeicherbereich gelesen und wenigstens ein Teil der gelesenen und bestimmten Funktionen zugeordneten Werte oder alle gelesenen Werte mit zugeordneten Schwellwerten bzw. Randbedingungen verglichen.
Es ist bevorzugt, dass die Optimierungseinheit die Entscheidung zum unmittelbaren Einbinden von den einer Funktion zugeordneten Programmzeilen aufgrund eines Überschreitens und / oder eines Unterschreitens von mehreren Schwellwerten durchführt. Mittels Abschätzungen, die anhand der ermittelten Anzahl von Funktionsaufrufen bezüglich der Laufzeit und des Speicherbedarfs vorgenommen werden können, kann die Optimierungseinheit in Verbindung mit dem Codegenerator ein weitgehend optimiertes Steuerungsprogramm zur Steuerung einer Vielzahl von Aktuatoren erzeugen.
Im Fall, dass anhand des Vergleichs mit Schwellwerten bzw. Randbedingungen keine Entscheidung getroffen werden kann, kann es vorgesehen sein, dass die Optimierungseinheit dem Benutzer vorschlägt, neue Schwellwerte bzw. Randbedingungen vorzugeben oder aber auf heuristische Werte zurückgreift oder aber, statt das Steuerungsprogramm global zu optimieren, nur eine lokale Optimierung umsetzt. Letztere Lösungen werden dem Benutzer bevorzugt angezeigt.

In einer bevorzugten Weiterbildung wird mittels der Testeinheit als dem ersten Parameter zugeordneter Wert der Mittelwert aus der Anzahl der Aufrufe bzw. Durchläufe der ersten Funktion im Hinblick auf alle Testdurchläufe mit verschiedenen Eingabewerten, d.h. repräsentativen Stimuli, ermittelt. In einer anderen Weiterbildung wird eine Ermittlung nach geeigneten Algorithmen, wie vorzugsweise Bildung eines Mittelwertes auf einzelne und/oder alle Parameter ausgedehnt.

Das erfindungsgemäße Verfahren zur Optimierung eines Steuerungsprogramms für Aktuatoren soll nachfolgend anhand der Ausführungsbeispiele im Zusammenhang mit der schematisierten Zeichnung erläutert werden. Hierbei sind funktionsgleiche Schaltungsteile mit denselben Bezugszeichen versehen. Es zeigen, die
- Fig. 1: Eine schematische Darstellung der Gewinnung von Profiling Daten zur Zuordnung der gewonnenen Werte zu den einzelnen Unterspeicherbereichen unter Verwendung eines modellierten Blockdiagramms,
- Fig. 2: Eine schematische Darstellung einer Erzeugung eines optimierten Steuerungsprogramms unter Verwendung der Werte der Parameter.

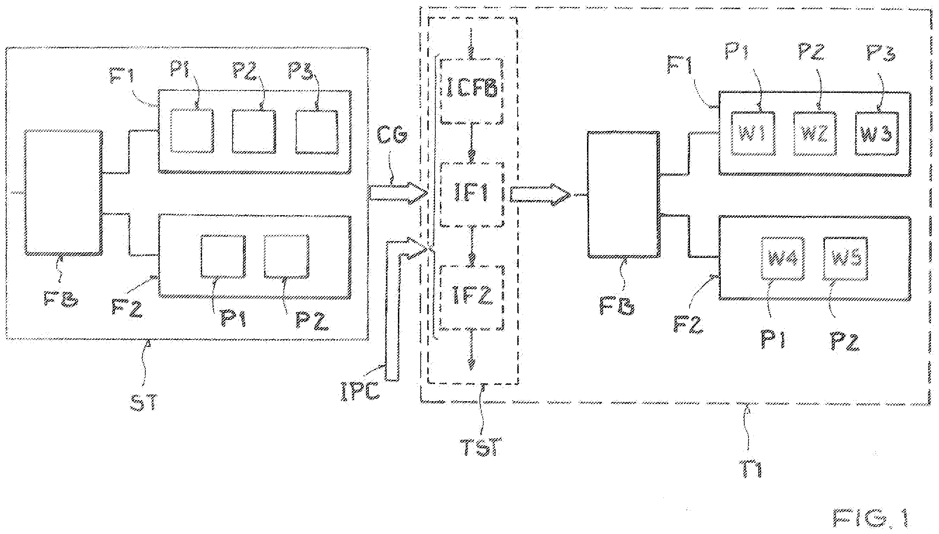

In der Abbildung der Figur 1, ist in einer schematischen Darstellung ein Steuerungsprogramm ST in Form eines Blockdiagramm-Modells mit einer ersten Funktion F1, der ein erster Parameter P1, ein zweiter Parameter P2 und ein dritter Parameter P3 zugeordnet sind, dargestellt. Des Weiteren ist eine zweite Funktion F2, aufweisend einen ersten zugeordneten Parameter P1 und einen zweiten zugeordneten Parameter P2, abgebildet. Der erste Parameter P1 der ersten Funktion und der Parameter P1 der zweiten Funktion bezeichnen eine gleiche Art von Parameter, die den beiden unterschiedlichen Funktionen F1 und F2 zugeordnet sind. Die Funktion F1 und die Funktion F2 sind mittels einer weiteren Funktion FB verbunden. Die Darstellung der einzelnen Funktionen F1, F2 und FB erfolgt in einzelnen den jeweiligen Funktionen zugeordneten Blockdiagramm-Einheiten. Blöcke und Verbindungslinien beschreiben das Steuerungsprogramm ST in Form eines Graphen. Hierdurch liegt das Steuerungsprogramm ST als ausführbares modelliertes Blockdiagramm vor. Mittels eines Codegenerators CG wird aus dem modellierten Blockdiagramm mit den einzelnen Blockdiagramm-Einheiten ein instrumentierter Programmcode IPC, das Teststeuerungsprogramm TST, erstellt und in einer Testeinheit T1 mehrmals mit repräsentativen, vom Benutzer bereitgestellten Stimuli, d.h. ausgewählten Eingabewerten, in einer virtuellen Testumgebung abgearbeitet. Die dabei gewonnenen Werte, die sogenannten Profiling-Informationen, werden abgespeichert. Das Teststeuerungsprogramm TST besteht aus mehreren instrumentierten Unterprogrammteilen, wobei ein erster Unterprogrammteil IF1 der ersten Funktion F1, ein zweiter Unterprogrammteil IF2 der zweiten Funktion F2 und ein dritter Unterprogrammteil ICFB der weiteren Funktion FB zugeordnet ist. Dem ersten Parameter P1, sowie dem zweiten Parameter P2 und dem dritten Parameter P3 der ersten Funktion F1 bzw. dem ersten Parameter P1 und dem zweiten Parameter P2 der zweiten Funktion F2, sind einzelne Unterspeicherbereiche zugeordnet. Bei der Abarbeitung des Teststeuerungsprogramms TST - und somit auch der einzelnen Funktionen F1 und F2 - in der Testeinheit mittels repräsentativer Stimuli werden in den den jeweiligen Funktionen zugeordneten Unterspeicherbereichen Werte für die jeweiligen zugeordneten Parameter abgespeichert. Hierbei wird für den ersten Parameter P1 der ersten Funktion F1 ein erster Wert W1, für den zweiten Parameter P2 der ersten Funktion ein zweiter Wert W2 und für den dritten Parameter der ersten Funktion ein dritter Wert W3 in den zugeordneten Unterspeicherbereichen abgespeichert. Des Weiteren wird für den ersten Parameter P1 der zweiten Funktion F2 ein Wert W4 und für den zweiten Parameter der zweiten Funktion der Wert W5 abgespeichert.

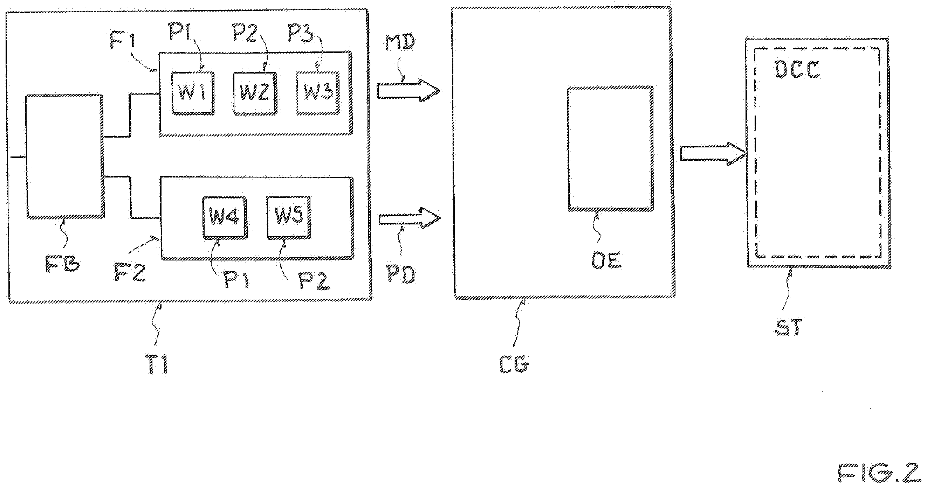

In der Figur 2 ist schematisch eine automatische Erzeugung eines weitgehend optimierten Programmcodes OCC des Steuerungsprogramms ST dargestellt. Hierzu wird eine Gesamtheit PD der in der Testeinheit T1 erfassten und gespeicherten Werte der einzelnen Parameter der Funktionen zusammen mit den Modellierungsinformationen MD, d.h. den Informationen über das Steuerprogramm, die in dem Blockdiagramm-Modell enthalten sind, einem Codegenerator CG mit einer Optimierungseinheit OE zur Verfügung gestellt. Mittels des Codegenerators CG und der Optimierungseinheit wird das ausführbare optimierte Steuerungsprogramm ST erzeugt, welches im finalen Verfahrensschritt nicht mehr instrumentiert ist. Bei der Generierung des optimierten Programmcodes OCC greift die Optimierungseinheit OE automatisch für die Generierung der Programmzeilen der jeweiligen Funktion auf die zu der Funktion abgespeicherten Werte der ihr zugeordneten Parameter zu. Die Optimierungseinheit OE vergleicht die einzelnen Werte mit einem oder mehreren Schwellwerten bzw. Randbedingungen und entscheidet anhand des Ergebnisses des Vergleichs, ob die Programmzeilen der jeweiligen Funktionen F1 und F2 unmittelbar in den zu erzeugenden optimierten Programmcode OCC des Steuerungsprogramms ST eingebunden werden und hierdurch bei einem mehrmaligen Einbinden der einer Funktion zugeordneten Programmzeilen zu einer mehrfachen Erhöhung des Speicherplatzbedarfs im Vergleich zu einem einmaligen Einbinden der Funktion führen, oder inwieweit die jeweilige Funktion mittels eines Unterprogramms bzw. eines Funktionsaufrufs eingebunden wird.

Bevorzugt werden zur Reduzierung des Speicherplatzbedarfs des Steuerungsprogramms, diejenigen Funktionen die nicht besonders zeitkritisch sind und besonders häufig bei der Ausführung bzw. Abarbeitung des Steuerungsprogramms aufgerufen werden als Unterprogramm eingebunden. Insbesondere werden bei einem langsamen Prozessor mit größerer Wahrscheinlichkeit weniger Funktionen als Unterprogramme in das Steuerungsprogramm implementiert werden als bei einem Prozessor mit einer hohen Leistungsfähigkeit.

## Patentansprüche

1. Verfahren zur Optimierung eines Steuerungsprogramms (ST) für Aktuatoren, wobei das Steuerungsprogramm (ST) mindestens eine erste Funktion (F1) zur Steuerung eines ersten Aktuators beinhaltet, und in einem ersten Schritt die Funktionalität des Steuerungsprogramms (ST) in Form eines ausführbaren graphischen Modells in Form einer graphischen Repräsentation des Steuerungsprogramms aufweisend mehrere Modell-Einheiten spezifiziert ist und der ersten Funktion (F1), eine erste graphische Modell-Einheit zugeordnet ist, und basierend auf dem Modell, mittels eines Codegenerators ein instrumentierter Programmcode (IPC) für ein Teststeuerungsprogramm (TST) erzeugt wird und der ersten Funktion (F1) erste Programmzeilen und ein erster Parameter (P1) zugeordnet werden, und wobei mittels einer Testeinheit (T1) das Teststeuerungsprogramm (TST) mit vorgegebenen Eingabewerten mehrfach abgearbeitet wird und basierend auf dem Ergebnis der Abarbeitung dem ersten Parameter (P1) ein Wert (W1) zugeordnet wird,
**dadurch gekennzeichnet, dass**
der dem ersten Parameter (P1) zugeordnete Wert (W1) in einem der ersten graphischen Modell-Einheit zugeordneten Speicherbereich gespeichert wird, in einem zweiten Schritt mittels des Codegenerators (CG) ein optimiertes Steuerungsprogramm (OCC) mit zweiten der ersten Funktion (F1) zugeordneten Programmzeilen erzeugt wird, wobei von einer Optimierungseinheit (OE) des Codegenerators (CG) der dem ersten Parameter (P1) zugeordnete Wert (W1) aus dem zugeordneten Speicherbereich gelesen wird und mit einem gegebenen Schwellwert verglichen wird und anhand des Ergebnisses des Vergleichs von der Optimierungseinheit (OE) entschieden wird, ob die zweiten, der ersten Funktion (F1) zugeordneten Programmzeilen in das Steuerungsprogramm (ST) unmittelbar oder mittels eines Unterprogrammaufrufs eingebunden werden.

2. Verfahren nach Anspruch 1, **dadurch gekennzeichnet, dass** der Speicherbereich aus einzelnen Unterspeicherbereichen besteht und einer Modell-Einheit jeweils ein Unterspeicherbereich zugeordnet wird.

3. Verfahren nach Anspruch 1 oder Anspruch 2, **dadurch gekennzeichnet, dass** der ersten Funktion (F1) ein zweiter Parameter (P2) zugeordnet ist und der dem zweiten Parameter (P2) zugeordnete Wert (W2) in dem der ersten Modell-Einheit zugeordneten Unterspeicherbereich abgespeichert wird.

4. Verfahren nach einem der Ansprüche 1 bis 3, **dadurch gekennzeichnet, dass** das Modell wenigstens eine zweite Funktion (F2) umfasst, welcher weitere Parameter zugeordnet sind, und der zweiten Funktion (F2) eine zweite Modell-Einheit und ein zweiter Unterspeicherbereich zugeordnet sind.

5. Verfahren nach einem der Ansprüche 1 bis 4, **dadurch gekennzeichnet, dass** von der Testeinheit (T1) als Wert des ersten Parameters (P1) einer Funktion, die Anzahl der Aufrufe der Funktion erfasst wird und in dem der ersten Modell-Einheit zugeordneten Unterspeicherbereich gespeichert wird.

6. Verfahren nach einem der Ansprüche 1 bis 5, **dadurch gekennzeichnet, dass** die Anzahl der Aufrufe einer Funktion für die zugehörige Modell-Einheit visualisiert wird.

7. Verfahren nach einem der Ansprüche 1 bis 6, **dadurch gekennzeichnet, dass** von der Optimierungseinheit (OE) ein zweiter der ersten Funktion zugeordneter Wert aus dem Unterspeicherbereich gelesen wird und mit einem zugeordneten zweiten Schwellwert verglichen wird.

8. Verfahren nach Anspruch 7, **dadurch gekennzeichnet, dass** die Entscheidung zum Einbinden von Programmzeilen von dem zweiten Schwellwert und oder von dem ersten Schwellwert abhängt.

9. Verfahren nach einem der Ansprüche 1 bis 8, **dadurch gekennzeichnet, dass** das in dem zweiten Schritt erzeugte optimierte Steuerprogramm (OCC) wiederum mit einer Instrumentierung versehen und als Teststeuerungsprogramm (TST) verwendet wird und erst nach weiteren Iterationsschritten das Verfahren beendet wird.

10. Verfahren nach einem der Ansprüche 1 bis 9, **dadurch gekennzeichnet, dass** für jeden Testdurchlauf als dem ersten Parameter (P1) zugeordneter Wert (W1) der Mittelwert aus der Anzahl der Aufrufe bzw. Durchläufe der ersten Funktion (F1) im Hinblick auf alle Testdurchläufe mit verschiedenen Eingabewerten ermittelt wird.

11. Verfahren nach einem der Ansprüche 1 bis 10, **dadurch gekennzeichnet, dass** der instrumentierte Code (IPC) in Form von Quellcode oder von ausführbarem Code vorliegt.

12. Verfahren nach einem der Ansprüche 1 bis 11, dadruch gekennzeichnet, dass der gegebene Schwellwert ein vom Benutzer vorgegeber oder von der Optimierungseinheit (OE) heuristisch ermittelter Wert ist.

13. Verfahren nach Anspruch 12, **dadurch gekennzeichnet, dass** der Schwellwert in dem Modell oder in der Optimierungseinheit (OE) hinterlegt ist.

14. Verfahren nach einem der Ansprüche 3 bis 13, **dadurch gekennzeichnet, dass** von der Testeinheit (T1) als Wert des zweiten Parameters (P2) einer Funktion, der Wert einer Art von Speicherplatzbedarf erfasst und in dem der ersten Modell-Einheit zugeordneten Unterspeicherbereich gespeichert wird.

15. Verfahren nach einem der Ansprüche 3 bis 13, **dadurch gekennzeichnet, dass** von der Testeinheit (T1) als Wert des zweiten Parameters (P2) einer Funktion, die Ausführungszeit der Funktion erfasst und in dem der ersten Modell-Einheit zugeordneten Unterspeicherbereich gespeichert wird.

## Claims

1. Method of optimising a control program (ST) for actuators, wherein the control program (ST) contains at least one first function (F1) for control of a first actuator and in a first step the functionality of the control program (ST) is specified in the form of an executable graphical model in the form of a graphical representation of the control program comprising several model units and a first graphical model unit is allocated to the first function (F1) and based on the model an instrumented program code (IPC) for a test control program (TST) is generated by means of a code generator and first program lines and a first parameter (P1) are allocated to the first function (F1), and wherein by means of a test unit (T1) the test control program (TST) is executed a number of times with predetermined input values and based on the result of the execution a value (W1) is allocated to the first parameter (P1),
**characterised in that**
the value (W1) allocated to the first parameter (P1) is stored in a memory region associated with the first graphical model unit, in a second step an optimised control program (OCC) with second program lines allocated to the first function (F1) is generated by means of the code generator (CG), wherein the value (W1) allocated to the first parameter (P1) is read out of the associated memory region by an optimisation unit (OE) of the code generator (CG) and compared with a given threshold value and on the basis of the result of the comparison it is decided by the optimisation unit (OE) whether the second program lines allocated to the first function (F1) are incorporated in the control program (ST) directly or by means of a sub-program interrogation.

2. Method according to claim 1, **characterised in that** the memory region consists of individual memory sub-regions and a respective memory sub-region is allocated to each model unit.

3. Method according to claim 1 or claim 2, **characterised in that** a second parameter (P2) is allocated to the first function (F1) and the value (W2) allocated to the second parameter (P2) is stored in the memory sub-region allocated to the first model unit.

4. Method according to any one of claims 1 to 3, **characterised in that** the model comprises at least one second function (F2) to which further parameters are allocated and a second model unit and a second memory sub-region are allocated to the second function (F2).

5. Method according to any one of claims 1 to 4, **characterised in that** the number of interrogations of the function is detected by the test unit (T1) as a value of the first parameter (P1) of a function and is stored in the memory sub-region associated with the first model unit.

6. Method according to any one of claims 1 to 5, **characterised in that** the number of interrogations of a function is visualised for the associated model unit.

7. Method according to any one of claims 1 to 6, **characterised in that** a second value allocated to the first function is read by the optimisation unit (OE) out of the memory sub-region and is compared with an allocated second threshold value.

8. Method according to claim 7, **characterised in that** the decision with respect to incorporation of program lines depends on the second threshold value and/or on the first threshold value.

9. Method according to any one of claims 1 to 8, **characterised in that** the optimised control program (OCC) generated in the second step is in turn provided with an instrumentation and is used as a test control program (TST) and the method is ended only after further iteration steps.

10. Method according to any one of claims 1 to 9, **characterised in that** the mean value of the number of interrogations or cycles of the first function (F1) with respect to all test cycles with different input values is determined for each test cycle as value (W1) allocated to the first parameter (P1).

11. Method according to any one of claims 1 to 10, **characterised in that** the instrumented code (IPC) is present in the form of a source code or executable code.

12. Method according to any one of claims 1 to 11, **characterised in that** the given threshold value is a value predetermined by a user or intuitively ascertained by the optimisation unit (OE).

13. Method according to claim 12, **characterised in that** the threshold value is filed in the model or in the optimisation unit (OE).

14. Method according to any one of claims 3 to 13, **characterised in that** the value of a form of memory space requirement is detected by the test unit (T1) as value of the second parameter (P2) of a function and is stored in the memory sub-region associated with the first model unit.

15. Method according to any one of claims 3 to 13, **characterised in that** the execution time of the function is detected by the test unit (T1) as value of the second parameter (P2) of a function and is stored in the memory sub-region associated with the first model unit.

## Revendications

1. Procédé pour optimiser un programme de commande (ST) pour des actionneurs, dans lequel le programme de commande (ST) contient au moins une première fonction (F1) pour la commande d'un premier actionneur, et dans une première étape la fonctionnalité du programme de commande (ST) est spécifiée sous la forme d'un modèle graphique exécutable sous la forme d'une représentation graphique du programme de commande présentant plusieurs unités de modèle et une première unité de modèle graphique est associée à la première fonction (F1), et en se basant sur le modèle, on produit au moyen d'un générateur de code un code de programme instrumenté (IPC) pour un programme de commande de test (TST) et on associe à la première fonction (F1) des premières lignes de programme et un premier paramètre (P1), et dans lequel on exécute à plusieurs reprises au moyen d'une unité de test (T1) le programme de commande de test (TST) avec des valeurs d'entrée prédéterminées et en se basant sur le résultat de l'exécution on associe une valeur (W1) au premier paramètre (P1),
**caractérisé en ce que**
l'on mémorise la valeur (W1) associée au premier paramètre (P1) dans une zone de mémoire associée à la première unité de modèle graphique, dans une deuxième étape on produit au moyen du générateur de code (CG) un programme de commande optimisé (OCC) avec des deuxièmes lignes de programme associées à la première fonction (F1), dans lequel on lit au moyen d'une unité d'optimisation (OE) du générateur de code (CG) la valeur (W1) associée au premier paramètre (P1) à partir de la zone de mémoire associée et on la compare à une valeur de seuil donnée et on décide au moyen de l'unité d'optimisation (OE), à l'aide du résultat de la comparaison, si les deuxièmes lignes de programme associées à la première fonction (F1) sont intégrées dans le programme de commande (ST) directement ou au moyen d'un appel d'un sous-programme.

2. Procédé selon la revendication 1, **caractérisé en ce que** la zone de mémoire se compose de zones de sous-mémoire individuelles et on associe respectivement une zone de sous-mémoire à une unité de modèle.

3. Procédé selon la revendication 1 ou la revendication 2, **caractérisé en ce qu'**un deuxième paramètre (P2) est associé à la première fonction (F1) et on mémorise la valeur (W2) associée au deuxième paramètre (P2) dans la zone de sous-mémoire associée à la première unité de modèle.

4. Procédé selon l'une quelconque des revendications 1 à 3, **caractérisé en ce que** le modèle comprend au moins une deuxième fonction (F2), à laquelle d'autres paramètres sont associés, et une deuxième unité de modèle et une deuxième zone de sous-mémoire sont associées à la deuxième fonction (F2).

5. Procédé selon l'une quelconque des revendications 1 à 4, **caractérisé en ce que** l'on détecte au moyen de l'unité de test (T1), comme valeur du premier paramètre (P1) d'une fonction, le nombre des appels de la fonction et on le mémorise dans la zone de sous-mémoire associée à la première unité de modèle.

6. Procédé selon l'une quelconque des revendications 1 à 5, **caractérisé en ce que** l'on visualise le nombre des appels d'une fonction pour l'unité de modèle correspondante.

7. Procédé selon l'une quelconque des revendications 1 à 6, **caractérisé en ce qu'**on lit au moyen de l'unité d'optimisation (OE) une deuxième valeur associée à la première fonction à partir de la zone de sous-mémoire et on la compare à une deuxième valeur de seuil associée.

8. Procédé selon la revendication 7, **caractérisé en ce que** la décision d'intégration de lignes de programme dépend de la deuxième valeur de seuil et/ou de la première valeur de seuil.

9. Procédé selon l'une quelconque des revendications 1 à 8, **caractérisé en ce que** l'on dote de nouveau le programme de commande optimisé (OCC) produit dans la deuxième étape, d'une instrumentation et on l'utilise comme programme de commande de test (TST) et on ne termine le procédé qu'après d'autres pas d'itération.

10. Procédé selon l'une quelconque des revendications 1 à 9, **caractérisé en ce que** l'on détermine pour chaque cycle de test comme valeur (W1) associée au premier paramètre (P1) la valeur moyenne du nombre des appels ou des cycles de la première fonction (F1) par rapport à tous les cycles de test avec différentes valeurs d'entrée.

11. Procédé selon l'une quelconque des revendications 1 à 10, **caractérisé en ce que** le code instrumenté (IPC) se présente sous la forme d'un code source ou d'un code exécutable.

12. Procédé selon l'une quelconque des revendications 1 à 11, **caractérisé en ce que** la valeur de seuil donnée est une valeur prédéterminée par l'utilisateur ou une valeur déterminée de façon heuristique par l'unité d'optimisation (OE).

13. Procédé selon la revendication 12, **caractérisé en ce que** la valeur de seuil est stockée dans le modèle ou dans l'unité d'optimisation (OE).

14. Procédé selon l'une quelconque des revendications 3 à 13, **caractérisé en ce que** l'on détecte au moyen de l'unité de test (T1) comme valeur du deuxième paramètre (P2) d'une fonction, la valeur d'un mode de besoin de place de mémoire et on la mémorise dans la zone de sous-mémoire associée à la première unité de modèle.

15. Procédé selon l'une quelconque des revendications 3 à 13, **caractérisé en ce que** l'on détecte au moyen de l'unité de test (T1) comme valeur du deuxième paramètre (P2) d'une fonction, le temps d'exécution de la fonction et on le mémorise dans la zone de sous-mémoire associée à la première unité de modèle.
